(19) Europäisches Patentamt
European Patent Office
Office européen des brevets

(11) **EP 2 951 454 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(21) Anmeldenummer: **14701582.0**

(22) Anmeldetag: **29.01.2014**

(51) Int Cl.:
***F16D 13/72*** *(2006.01)*

(86) Internationale Anmeldenummer:
**PCT/EP2014/051716**

(87) Internationale Veröffentlichungsnummer:
**WO 2014/118228 (07.08.2014 Gazette 2014/32)**

(54) **INTEGRIERTES KÜHLSYSTEM FÜR EINE TROCKENE DOPPELKUPPLUNG EINES DOPPELKUPPLUNGSGETRIEBES**

INTEGRATED COOLING SYSTEM FOR A DRY DUAL CLUTCH OF A DUAL CLUTCH TRANSMISSION

SYSTÈME DE REFROIDISSEMENT INTÉGRÉ POUR DOUBLE EMBRAYAGE SEC D'UNE BOÎTE DE VITESSES À DOUBLE EMBRAYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.01.2013 DE 102013201423**

(43) Veröffentlichungstag der Anmeldung:
**09.12.2015 Patentblatt 2015/50**

(73) Patentinhaber: **Ford Global Technologies, LLC Dearborn, MI 48126 (US)**

(72) Erfinder: **KIRCHHOFFER, Johann 50737 Köln (DE)**

(74) Vertreter: **Dörfler, Thomas Ford-Werke GmbH Abt. NH/364 Henry-Ford-Strasse 1 50735 Köln (DE)**

(56) Entgegenhaltungen:
DE-A1-102008 033 813    DE-A1-102010 007 198
US-A1- 2012 123 635

**Beschreibung**

Die Erfindung betrifft ein Doppelkupplungsgetriebe für Kraftfahrzeuge mit zwei Teilgetrieben, einer trockenen Doppelkupplung, die das Drehmoment vom Motor wahlweise auf eines der beiden Teilgetriebe überträgt, sowie einem Kühlsystem mit einem Lüfterradsystem zur aktiven Luftkühlung der Doppelkupplung.

Die Erfindung ist auch bei manuell geschalteten Getrieben und automatisierten Schaltgetrieben mit einer einzelnen Kupplung anwendbar.

Doppelkupplungsgetriebe sind automatische Schaltgetriebe, die mittels zweier Teilgetriebe einen vollautomatischen Gangwechsel ohne Kraftunterbrechung ermöglichen. Die Getriebesteuerung wählt die Gänge selbsttätig oder nach Fahrerwunsch im Rahmen der zugelassenen Drehzahlbereiche. Die Übertragung des Drehmoments erfolgt über eine der beiden Kupplungen, die die beiden Teilgetriebe mit dem Motor verbinden. Während eine Kupplung schließt, öffnet die andere.

Derartige trockene Doppelkupplungen leiden häufig an mangelnder Kühlung bzw. an Überhitzung. Dies ist insbesondere bei kleinen Motoren problematisch, bei denen häufig geschaltet werden muss und die Kupplungsscheiben einer hohen Schleifbelastung unterworfen sind, und zwar insbesondere beim Anfahren oder beim Stop-and-go-Betrieb.

Parallel zur Überhitzung können bei der Nutzung von spezifischen Reibbelägen störende Kupplungsgerüche auftreten, die unter Umständen in den Fahrgastraum eintreten und zu Belästigungen der Insassen führen. Eine weitere Folge der Überhitzung ist eine starke Streuung des Reibwertes über der Kupplungstemperatur was zu Anfahrrupfen und unangenehmen Schaltstößen führen kann.

Weiterhin muss für die Trockenkupplungen genügend Kühlungsmasse an den Kupplungselementen zur Verfügung gestellt werden, um ein Überhitzen der Kupplungsoberflächen zu vermeiden. Dadurch muss allerdings der Nachteil in Kauf genommen werden, dass die Kupplungsmassen bei jeder Schaltung, nämlich beim Anfahren und Beschleunigen bzw. bei jedem Abbremsvorgang beschleunigt bzw. verzögert werden müssen. Dies verschlechtert den Gesamtwirkungsgrad des Getriebes sowie die Schalt- und Anfahrdynamik.

Um dieses Problem zu lösen, ist bereits in der DE 10 2011 087 458.5 vorgeschlagen worden, die Kupplung aktiv zu kühlen. Zur Erzeugung des Kühlluftstroms dient dabei ein Lüfterrad, welches innerhalb der Antriebsscheibe oder innerhalb der Zentralscheibe sitzt. Bei dieser vorgeschlagenen Version wird allerdings nur die äußere Umgebung der Anfahrkupplung gekühlt. Mit einem solchen Kühlsystem kann die erforderliche Kühlleistung ab der Reiboberfläche, verbunden mit hohen Schlupfdrehzahlen, nicht erbracht werden. Hier besteht nach wie vor die Gefahr der Oberflächenüberhitzung und ein daraus resultierender Kupplungskapazitäts- und -reibungsverlust bzw. ein daraus resultierendes "Kupplungsfading".

Aus der DE 102 25 807 ist eine manuelle Kupplung bekannt, die zum einen eine Druckplatte mit internen Verstrebungselementen vorsieht, zum anderen aber nicht gleichzeitig die Zentralplatte mit in dieses Konzept einbezieht. Die Verstrebungselemente dienen in erster Linie zur Elastizitätsverbesserung der Druckplatte bzw. zur besseren Anschmiegung der Druckplatte an das Reibelement, wobei lediglich als Nebeneffekt eine Kühlung des Systems auftritt.

Aus der DE 198 58 260 C2 ist eine aus zwei Scheiben bestehende Zentralplatte bekannt, wobei zwischen den Scheiben axiale Distanzstücke und Abstandshalter vorgesehen sind. Der hindurchtretende Luftstrom wird durch zusätzlich angebrachte Luftleitelemente am Ausgang der Distanzstücke über die Drehzahl gesteuert. Ein solches System weist den entscheidenden Nachteil auf, dass der Luftstrom nicht optimal kontrollierbar ist. Weiterhin ist nachteilig, dass die Zentralplatte aus mehreren Einzelteilen besteht, wodurch wiederum die Wärmeleitfähigkeit negativ beeinträchtigt wird.

Aus der US 5,857,547 ist eine Kupplung mit einer Druckplatte bekannt, die auf der aktiven Berührungsseite ein Verrippungssystem aufweist. Dieses Verrippungssystem bewirkt eine zusätzliche Kühlung der Druckplatte. Bei diesem System wird jedoch die Zentralscheibe nicht mit in das Kühlsystem einbezogen. Die Rippen sind an der Druckplatte geradlinig gestaltet, wodurch eine variable Konvektion über die Anpressoberfläche ausgeschlossen wird. Darüber hinaus ist keine zusätzliche Scheibe auf der Anpressseite der Druckplatte vorgesehen, wodurch die Steifigkeit der Druckplatte verringert und damit die Gesamtkontaktierungsfläche der Druckplatte gegenüber dem Reibelement verringert wird. Gleichzeitig wird dadurch das Auftreten partieller Überhitzung unterstützt. Des Weiteren besteht die Gefahr, dass die erforderliche Druckplattenmasse unterschritten wird, die für die Aufnahme der Basiswärme erforderlich ist.

Die erwähnten bekannten Systeme weisen gemeinsam den Nachteil auf, dass sie nicht in der Lage sind, ein Doppelkupplungssystem mit einer Zentralscheibe und zwei Anpressplatten ausreichend an der Kontaktoberfläche zu kühlen.

Aus der DE 10 2010 007 198 A1 ist ein Doppelkupplungsgetriebe für ein Kraftfahrzeugen mit zwei Teilgetrieben und einer Doppelkupplung mit zwei trockenen Teilkupplungen sowie einer Luftfördereinrichtung zur aktiven Luftkühlung bekannt. Als Luftfördereinrichtung ist ein gesondertes Lüfterrad vorgesehen. Mit einem solchen Doppelkupplungsgetriebe ist zwar bereits eine aktive Luftkühlung möglich, jedoch reichen die in dieser Druckschrift erwähnten Maßnahmen nicht aus, um ein Doppelkupplungssystem mit einer Zentralscheibe und zwei Anpressplatten ausreichend an den Kontaktoberflächen zu kühlen.

Aus der US 2012/0123635 A1 ist ein Kühlsystem für Kupplungen bekannt. Dabei handelt es sich aber um ein externes Luftführungssystem, welches nicht mit dem Anmeldungsgegenstand vergleichbar ist.

Aus der DE 10 2008 033 813 A1 ist eine Zwischenplatte für eine Mehrscheibenkupplung bekannt. Zur Erhöhung der Lebensdauer der Mehrscheibenkupplung ist deren erste Reibfläche an einem ersten Plattenelement und die zweite Reibfläche an einem zweiten Plattenelement angeordnet, wobei zwischen dem ersten und dem zweiten Plattenelement eine Abstandshalteranordnung vorgesehen ist. Durch die Pumpwirkung der rotierenden Kupplung strömt die Luft stets von innen nach aussen durch den Spalt zwischen den beiden Teilen der zweiteiligen Zwischenplatte. Der Erfindung liegt daher die Aufgabe zugrunde, ein Kühlsystem für eine trockene Doppelkupplung zu schaffen, bei welcher sämtliche Funktionsteile des Kühlsystems optimal ausgestattet sind, wobei gleichzeitig die Möglichkeit bestehen soll, die Kupplungsmassen erheblich zu reduzieren.

Erfindungsgemäß wird diese Aufgabe durch die Merkmale des Anspruchs 1 gelöst, indem das Lüfterrad des Lüfterradsystems in die Zentralscheibe integriert ist und beide ein zusammenhängendes Bauteil bilden, die Zentralscheibe als Lüfterrad des Lüfterradsystems ausgebildet ist, die Zentralscheibe Durchlässe für den Kühlluftstrom aufweist, die in der Zentralscheibe vorgesehenen Lüfterräder mit Lüfterschlaufen versehen sind, die einstellbare Eintrittswinkel und Austrittswinkel zum Anpassen der Luftstromgeschwindigkeit und -richtung aufweisen, die Durchlässe radial verlaufen bzw. eine Radialkomponente aufweisen und zur Vergrößerung der Kühloberfläche zwischen den Lüfterschaufeln Kühlinseln und/oder Kühlqueröffnungen vorgesehen sind.

Bei einer Doppelkupplung wird die Zentralscheibe von beiden Seiten mit Energieeinträgen belastet, was insbesondere während oftmaligem Schalten im Stadtverkehr auftritt. Hierbei muss eine variable Kühlung für die Zentralscheibe sowie für die beiden Anpressplatten vorgesehen sein, um die Gesamtenergie aus dem System abtransportieren zu können.

Die Grundlage dafür sind vorzugsweise folgende Merkmale:

1) Ausreichend hohe Masse zum Aufnehmen der Reibungsenergie;
2) homogene Struktur zur Sicherstellung einer widerstandsfreien Wärmeleitung,
3) eine entsprechend angepasste Geometrie innerhalb der Zentralscheibe und der Anpressplatten, um über die Konvektion die Wärme aus dem System an die
2) homogene Struktur zur Sicherstellung einer widerstandsfreien Wärmeleitung,
3) eine entsprechend angepasste Geometrie innerhalb der Zentralscheibe und der Anpressplatten, um über die Konvektion die Wärme aus dem System an die Umgebungsluft abzugeben als ein Inneres Kühlungssystem;
4) Steuerung der Konvektion über die Motordrehzahl und über das Innere Kühlungssystem; und
5) ein Äußeres Kühlsystem, welches eine geringe Eingangstemperatur des Kühlluftstroms in die Zentralscheibe und Anpressplatten gegenüber der Ausgangstemperatur gewährleistet.

Mit dem erfindungsgemäßen Lüfterradsystem, welches innerhalb der Zentralscheibe und/oder innerhalb der beiden Anpressplatten angeordnet ist, wird das Kühlungssystem innerhalb der Kupplung optimal gestaltet. Es stellt einen wesentlichen Teil des Innere Kühlungssystems dar.

Die Erfindung schließt in diesem Zusammenhang die Kombination folgender Lüfterradsysteme ein:

1) nur in der Zentralscheibe
2) nur in der ersten Anpressplatte
3) nur in der zweiten Anpressplatte
4) nur in den beiden Anpressplatten
5) nur in der Zentralscheibe und der ersten Anpressplatte
6) nur in der Zentralscheibe und der zweiten Anpressplatte
7) in der Zentralscheibe und in beiden Anpressplatten

Alle oben genannten Lüfterradsysteme rotieren mit der vom Motor kommenden Eingangswelle bzw. der auf der Eingangswelle sitzenden Antriebsscheibe, sodass der durch das Lüfterradsystem erzeugte Kühlluftstrom durch das gesamte Gehäuse der Doppelkupplung hindurchführbar ist und zusätzlich die an den Reibungsstellen zwischen der Zentralscheibe und den Anpressplatten erzeugte Wärme abführt. Dies gelingt insbesondere dann optimal, wenn die Lüfterräder mit einem homogenen Wärmeübergang ausgestattet sind, beispielsweise in Form eines homogenen Gussteils, und gleichzeitig eine bestimmte Wärmespeicherkapazität bzw. Kühlungsmasse nicht unterschreiten.

Durch die erfindungsgemäßen Merkmale ist nicht nur eine permanente Kühlung möglich, sondern auch eine signifikante Reduzierung der Kupplungsmassen.

Vorzugsweise rotiert das Lüfterradsystem mit derselben Drehzahl wie die vom Motor kommende Eingangswelle der Doppelkupplung bzw. mit der auf der Eingangswelle sitzenden Antriebsscheibe der Doppelkupplung. Eine solche Konstruktion ist mit einfachen technischen Mitteln zu erreichen, indem das Lüfterradsystem lediglich auf der Motorausgangswelle angebracht zu werden braucht oder mit dieser gekoppelt wird. Dabei kann das Lüfterradsystem mit der mit der Motorausgangswelle bzw. Antriebsscheibe verbundenen Zentralscheibe bzw. den Anpressplatten der Doppelkupplung rotieren. In diesem Zusammenhang ist es wichtig, dass das Lüfterradsystem den Kühlluftstrom parallel zu den Kontaktstellen zwischen Zentralscheibe und Anpressplatten entlangführt und somit die Kühlung optimiert, die von der jeweiligen Motordrehzahl beeinflusst wird.

Ferner besteht ein wesentliches Merkmale der Erfindung darin, dass die Zentralscheibe und/oder zumindest eine der Anpressplatten Durchlässe für den Kühlluftstrom aufweisen.

Die Durchlässe verlaufen dabei zweckmäßig radial oder weisen zumindest eine Radialkomponente auf, sodass die Kühlluft über die gesamte Fläche der Zentralscheibe bzw. der Anpressplatten verteilt wird.

Die Durchlässe in der Zentralscheibe und/oder zumindest in einer der Anpressplatten können als Ausnehmungen an der Reiboberfläche ausgebildet sein.

Vorzugsweise sind die in der Zentralscheibe sowie den Anpressplatten ausgebildeten Lüfterräder einstückig mit der Zentralscheibe bzw. der jeweiligen Anpressplatte ausgebildet, sodass keine Wärmeübergangswiderstände entstehen können.

Um die Kühlluft optimal steuern zu können, können die in der Zentralscheibe und/oder den Anpressplatten vorgesehenen Lüfterräder mit Lüfterschaufeln versehen sein, die einstellbare Eintrittswinkel und Austrittswinkel zum Anpassen der Luftstromgeschwindigkeit und -richtung aufweisen. Auf diese Weise erfolgt eine optimale Kühlluftverteilung zu sämtlichen Bereichen der Zentralscheibe bzw. den Anpressplatten.

Zur Vergrößerung der Kühloberfläche der Zentralscheibe und der Anpressplatten können zwischen den Lüfterschaufeln Kühlinseln vorgesehen sein.

Darüber hinaus sind zweckmäßig zwischen den Lüfterschaufeln Kühlqueröffnungen zur Vergrößerung der Kühloberfläche angeordnet.

Das Lüfterradsystem saugt die Kühlluft von außerhalb des Kupplungsgehäuses an. Insofern sollte der Einlassbereich der Kühlluft in das Kupplungsgehäuse zweckmäßig in Strömungsrichtung vor dem jeweiligen Lüfterrad liegen. Es kann aber auch zusätzlich ein in der Antriebsscheibe oder an der Zentralplatte oder an beiden vorgesehen sein, um die Eingangsgeschwindigkeit des Kühlluftstroms in die Lüfterräder und damit den Kühlluftdurchsatz zu erhöhen.

Da der Kühlluftstrom das gesamte Gehäuse der Doppelkupplung erreichen soll, liegt der Auslassbereich für die Kühlluft vorzugsweise an dem dem Einlassbereich gegenüberliegenden Ende des Kupplungsgehäuses. Die dazwischenliegenden Bereiche sind zweckmäßig mit entsprechenden Durchlässen versehen.

Um zu gewährleisten, dass die Kühlluft eine ausreichend tiefe Temperatur aufweist, können die Einlass- und Auslassbereiche der Kühlluft über ein Leitungssystem mit dem Frontkühler des Fahrzeugs verbunden sein. Dies stellt hier einen wesentlichen Bestandteil des Äußeren Kühlungssystems dar. Dadurch ist auch gewährleistet, dass die Kühlluft weitestgehend trocken ist, denn die angesaugte Luft darf keinesfalls Wasser enthalten.

Optional oder zusätzlich kann ein in der Antriebsscheibe integriertes Lüfterrad vorgesehen werden um den Luftdurchsatz über das Äußere Kühlungssystem zu erhöhen und die Temperatur im Kupplungsgehäuse zu reduzieren.

Dieses Äußere Kühlungssystem kann auch optional elektronisch gesteuert sein, indem man das integrierte Lüfterrad in der Antriebsscheibe beibehält und die Kupplungsgehäuse Lufttemperatur über eine elektronische Regelung des Luftstromes mittels einer elektronischen Luftklappensteuerung realisiert und/oder das integrierte Lüfterrad in der Antriebsscheibe durch Luftdurchtrittsöffnungen ersetzt und ein zusätzlich elektrisch angetriebenes Pumpensystem einführt, um somit über die Luftstromregelung die Lufttemperatur im Kupplungsgehäuse zu kontrollieren.

Um die Kühlluft sauber zu halten, können in dem Kühlluftstrom im Einlass- und Auslassbereich des Kupplungsgehäuses Luftfilter angeordnet sein.

Die Erfindung ist in der Zeichnung beispielhaft veranschaulicht und im Nachstehenden im Einzelnen anhand der Zeichnung beschrieben. Es zeigen:

Fig. 1: einen Schnitt durch den oberen Teil eines ersten Ausführungsbeispiels einer Doppelkupplung,

Fig. 2: den gleichen Schnitt wie Fig. 1 durch ein zweites Ausführungsbeispiel einer Doppelkupplung,

Fig. 3: den gleichen Schnitt wie Fig. 1 durch das erste Ausführungsbeispiel einer Doppelkupplung mit integriertem Lüfterradsystem als Inneres Kühlsystem,

Fig. 4: den gleichen Schnitt wie Fig. 2 durch das zweite Ausführungsbeispiel einer Doppelkupplung mit integriertem Lüfterradsystem als Inneres Kühlsystem,

Fig. 5a bis 5c: verschiedene Ausführungsformen des integrierten Lüfterradsystems,

Fig. 6: das Luftdurchlasssystem des ersten Ausführungsbeispiels der Doppelkupplung,

Fig. 7:  das Luftdurchlasssystem des zweiten Ausführungsbeispiels der Doppelkupplung,

Fig. 8:  eine schematische Übersicht über eine erste Möglichkeit zur Führung des Luftstroms außerhalb des Kupplungssystems als Äußeres Kühlungssystem,

Fig. 9:  eine schematische Übersicht über die in 8a dargestellten Führung des Luftstroms außerhalb des Kupplungssystems elektronisch geregelt bzw. gesteuert als Äußeres Kühlungssystem,

Fig. 10:  eine schematische Übersicht über eine zweite Möglichkeit zur Führung des Luftstroms außerhalb des Kupplungssystems als Äußeres Kühlungssystem, und

Fig. 11:  eine schematische Übersicht über eine dritte Möglichkeit zur Führung des Luftstroms außerhalb des Kupplungssystems als Äußeres Kühlungssystem.)

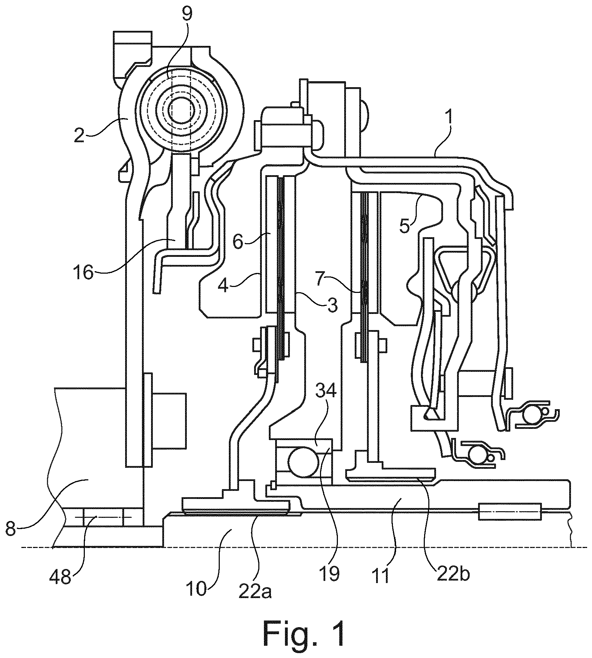

Nach Fig. 1 der Zeichnung besteht die Doppelkupplung 1 im Wesentlichen aus einer Antriebsscheibe 2, einer mit dieser verbundenen Zentralscheibe 3, beidseitig der Zentralscheibe 3 vorgesehenen Anpressplatten 4 und 5 sowie zwischen der Zentralscheibe 3 und den Anpressplatten 4 und 5 angeordneten Reibscheiben 6 bzw. 7.

Die Antriebsscheibe 2 sitzt drehfest auf der Eingangswelle 8 der Doppelkupplung 1 und rotiert folglich mit dieser mit der gleichen Drehzahl. Die Eingangswelle 8 ist normalerweise die Ausgangswelle bzw. Kurbelwelle eines in der Zeichnung nicht dargestellten Motors.

Die Antriebsscheibe 2 ist über einen Torsionsdämpfer 9 und eine Sekundärscheibe 16 mit der Zentralscheibe 3 verbunden, d.h., dass die Zentralscheibe 3 mit der gleichen Drehzahl wie die Antriebsscheibe 2 umläuft. Die beidseitig der Zentralscheibe 3 angeordneten Anpressplatten 4 und 5 laufen mit der Zentralscheibe 3 um, jedoch sind sie relativ zu der Zentralscheibe 3 axial verschiebbar. Die gesamte Einheit der Doppelkupplung 1 mit der Zentralscheibe 3 und den beiden Anpressplatten 4 und 5 sind auf einem Hohlwellenlager 19 abgestützt. Eine als Hohlwelle 11 ausgebildete erste Ausgangswelle, auf der das Hohlwellenlager 19 angeordnet ist, ist wiederum mit dem gesamten System der Doppelkupplung 1 über eine als Vollwelle 10 ausgebildete zweite Ausgangswelle über ein Pilotlager 48 auf der Eingangswelle 8 abgestützt.

Zur Auslösung des Kupplungsvorgangs wird eine der Anpressplatten 4 bzw. 5 in Richtung auf die Zentralscheibe 3 bewegt, wodurch die jeweilige Reibscheibe 6 bzw. 7 fest an die Zentralscheibe 3 angedrückt wird.

Durch das Ankuppeln der jeweiligen Reibscheibe 6 bzw. 7 rotiert diese mit der Zentralscheibe 3 und überträgt das Drehmoment des Motors auf die jeweilige Ausgangswelle 10 bzw. 11 der Doppelkupplung 1.

Die Ausgangswelle 10, die mit der in der Zeichnung links dargestellten Reibscheibe 6 über eine Kerbverzahnung 22a verbunden und als Vollwelle ausgebildet ist, mündet in ein in der Zeichnung nicht dargestelltes Getriebegehäuse, wo sie zum Antrieb eines ersten Teilgetriebes dient. Dieses Teilgetriebe bedient beispielsweise die Gänge 1, 3 und 5.

Die Ausgangswelle 11, die mit der in der Zeichnung rechts dargestellten Reibscheibe 7 über eine Kerbverzahnung 22b verbunden und als Hohlwelle ausgebildet ist, umgibt die Vollwelle 10. Die Hohlwelle 11 führt ebenfalls in das in der Zeichnung nicht dargestellte Getriebegehäuse und dient zum Antrieb eines zweiten Teilgetriebes, welches beispielsweise für die Gänge 2, 4 und 6 sowie den Rückwärtsgang R vorgesehen ist.

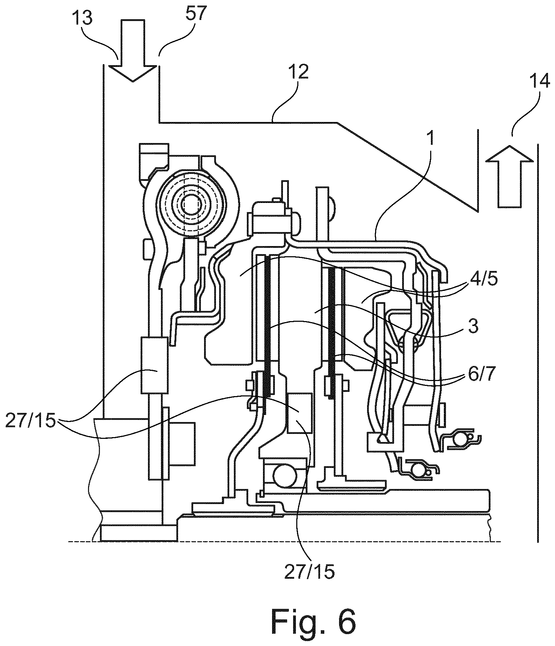

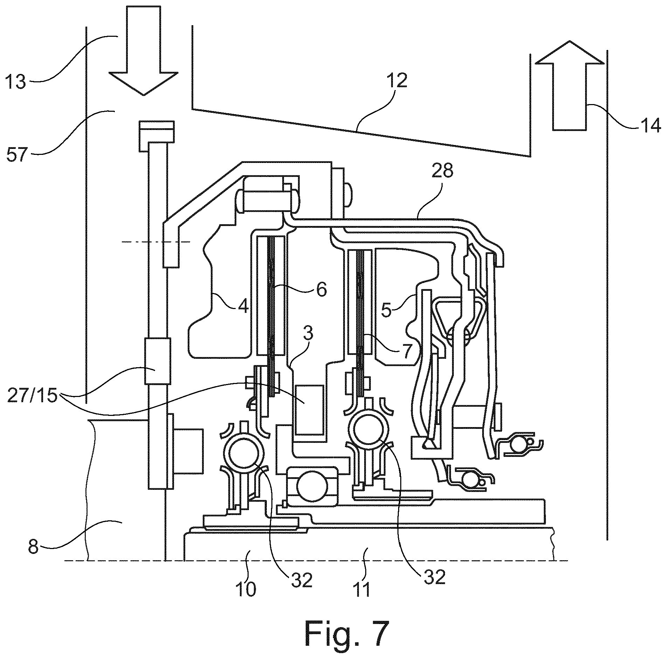

Wie in den Figuren 6 und 7 gezeigt, ist die gesamte in der Zeichnung dargestellte Doppelkupplung 1 von einem Kupplungsgehäuse 12 umgeben.

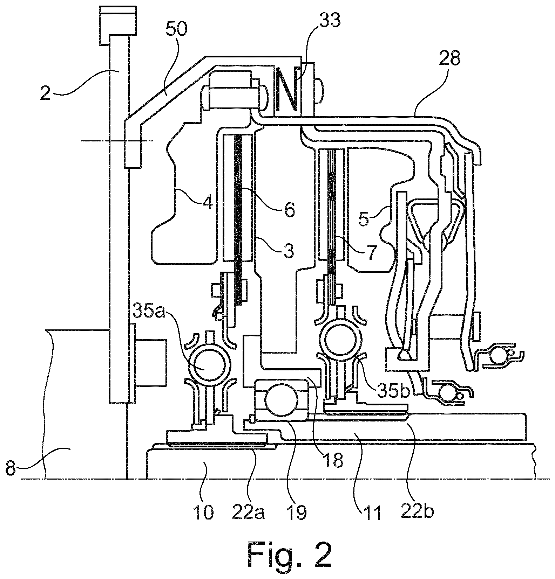

Nach Fig. 2 der Zeichnung besteht die Doppelkupplung 28 im Wesentlichen aus einer Antriebsscheibe 2, einer mit dieser verbundenen Zentralscheibe 3 beidseitig der Zentralscheibe 3 vorgesehenen Anpressplatten 4 und 5 sowie zwischen der Zentralscheibe 3 und den Anpressplatten 4 und 5 angeordneten Reibscheiben 6 bzw. 7.

Die Antriebsscheibe 2 sitzt drehtest auf der Eingangswelle 8 der Doppelkupplung 28 und rotiert folglich mit dieser mit der gleichen Drehzahl. Die Eingangswelle 8 ist normalerweise die Ausgangswelle bzw. Kurbelwelle eines in der Zeichnung nicht dargestellten Motors.

Die Antriebsscheibe 2 ist bei diesem Ausführungsbeispiel über einen Kupplungskörper 50 und ein radial/axiales Federsystem 33 mit der Zentralscheibe 3 verbunden, d.h., dass die Zentralscheibe 3 mit der gleichen Drehzahl wie die Antriebsscheibe 2 umläuft. Die beidseitig der Zentralscheibe 3 angeordneten Anpressplatten 4 und 5 laufen mit der Zentralscheibe 3 um, jedoch sind sie relativ zu der Zentralscheibe 3 axial verschiebbar. Hierbei ist die Zentralscheibe 3 über das Hohlwellenlager 19 und eine kardanische Anlaufscheibe 18 radial in axialer Richtung abgestützt.

Die Zentralscheibe 3 und die Anpressplatten 4 und 5 sind fest mit der Antriebsscheibe 2 über einen Kupplungskörper 50 verbunden und sind über die kardanische Anlaufscheibe 18 in radialer Richtung in axialer Richtung abgestützt.

Zur Auslösung des Kupplungsvorgangs wird eine der Anpressplatten 4 bzw. 5 in Richtung auf die Zentralscheibe 3 bewegt, wobei die jeweilige Reibscheibe 6 bzw. 7 fest an die Zentralscheibe 3 angedrückt wird.

Durch das Ankuppeln der jeweiligen Reibscheibe 6 bzw. 7 rotiert diese mit der Zentralscheibe 3 und überträgt das Drehmoment des Motors über Dämpfersysteme 35a und 35b auf die jeweilige Ausgangswelle 10 bzw. 11 der Doppelkupplung 28.

Die Ausgangswelle 10, die mit der in der Zeichnung links dargestellten Reibscheibe 6 über die Kerbverzahnung 22a verbunden ist, ist als Vollwelle ausgebildet und mündet in ein in der Zeichnung nicht dargestelltes Getriebegehäuse, wo sie zum Antrieb eines ersten Teilgetriebes dient. Dieses Teilgetriebe bedient beispielsweise die Gänge 1, 3 und 5.

Die Ausgangswelle 11, die mit der in der Zeichnung rechts dargestellten Reibscheibe 7 über die Kerbverzahnung 22b verbindbar ist, ist als Hohlwelle ausgebildet, die die Vollwelle 10 umgibt. Die Hohlwelle 11 führt ebenfalls in das in der Zeichnung nicht dargestellte Getriebegehäuse und dient zum Antrieb eines zweiten Teilgetriebes, welches beispielsweise für die Gänge 2, 4, 6 und R vorgesehen ist.

Die gesamte in der Zeichnung dargestellte Doppelkupplung 28 ist von einem Kupplungsgehäuse 12 umgeben, siehe Figuren 6 und 7. Die axialen Ungleichförmigkeiten werden durch ein Blattfedersystem 33 ausgeglichen. Der radiale Ausgleich ist durch das radiale Spiel zwischen der Zentralscheibe 3 und der kardanischen Anlaufscheibe 18 gegeben.

Im Anfahrzustand, insbesondere auch im Stop-and-go-Betrieb, bei welchem die jeweilige Reibscheibe 6 bzw. 7 zwischen der Zentralscheibe 3 und der jeweiligen Anpressplatte 4 bzw. 5 schleift, entsteht eine erhebliche Reibungswärme, die abgeführt werden muss, denn andernfalls würde es sowohl zu einem starken Verschleiß der Reibscheiben 6 und 7 als auch zu Geruchsbildung kommen. Des Weiteren wird die Reibpaarung an der Oberfläche zerstört, was zu Kupplungsfading bzw. Kupplungsrupfen und einer hohen Streuung des Reibwertes führen könnte.

Zur Kühlung der Doppelkupplungen 1 bzw. 28 ist das Kupplungsgehäuse 12 mit einem Lufteinlass 13 und einem Luftauslass 14 versehen wie in Fig. 6 und Fig. 7 dargestellt. Der Lufteinlass 13 ist dabei im Bereich der Eingangsseite des Kupplungsgehäuses 12 und der Luftausgang 14 auf der Ausgangsseite des Kupplungsgehäuses 12 der Doppelkupplung 1 bzw. 28 angeordnet.

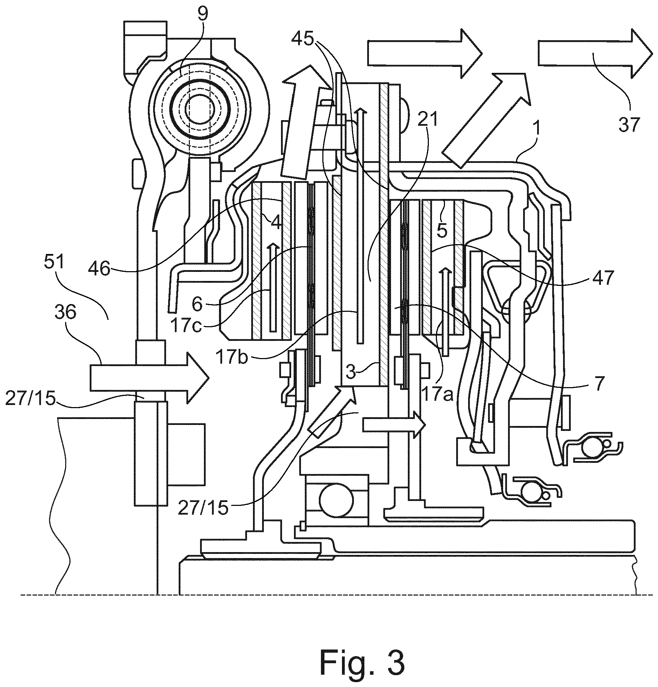

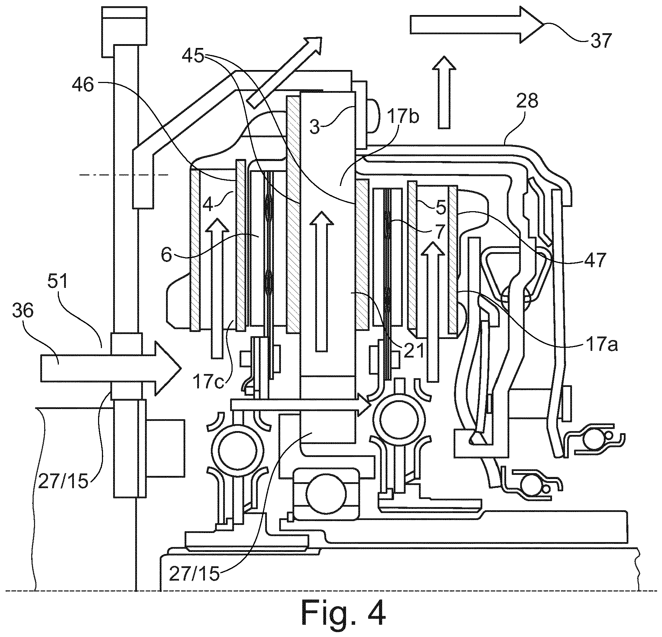

Zur Erzeugung eines intensiven Luftstroms durch das Kupplungsgehäuse 12 sind bis zu drei Lüfterradsysteme 17a, 17b bzw. 17c innerhalb eines Gesamtlüftungssystems 21 vorgesehen. Das Lüftungssystem 21 ist, wie in Fig. 3 und Fig. 4 dargestellt, für beide Ausführungsformen der Doppelkupplung 1 bzw. 28 in die Zentralscheibe 3 und die jeweiligen Anpressplatten 4 und 5 integriert. Insofern rotieren die Lüfterradsysteme 17a bis 17c mit der Antriebsscheibe 2 und somit auch mit der vom Motor kommenden Eingangswelle 8. Der Kühlluftstrom erstreckt sich somit von dem Luftstromeinlass 36 über die Teilluftströme der Lüfterradsysteme 17a bis 17c zum Luftstromauslass 37.

Das Gesamtlüftungssystem 21 besteht im Wesentlichen aus den Lüfterradsystemen 17a bis 17c und den entsprechenden Anpressflächen 45 der Zentralscheibe 3 und den Anpressflächen 46 und 47 der Anpressplatten 4 bzw. 5, die starr mit dem jeweiligen Lüftersystem verbunden sind. Die Zentralscheibe 3 sowie als auch die Anpressplatten 4 und 5, die die Lüftersysteme bilden, können einstückig oder mehrstückig als geklebte, verschraubte oder genietete Konstruktion ausgelegt sein.

Des Weiteren sind bei den beiden Ausführungsformen der Doppelkupplungen 1 bzw. 28 Luftdurchtrittsöffnungen 27 in der Antriebsscheibe 2 und/oder in der Zentralscheibe 3 vorgesehen, um den Lufteintritt in die drei Lüfterradsysteme zu erleichtern bzw. überhaupt zu ermöglichen. Anstelle der Luftdurchtrittsöffnungen können wahlweise auch zusätzliche Lüfterräder (integriertes Lüfterradsystem 15) in dem Gesamtlüftersystem 21 vorgesehen sein, und zwar entweder in der Antriebsscheibe 2 und/oder in der Zentralscheibe 3, sodass die Kühlluftstromgeschwindigkeit und/oder der Kühlluftstromdurchsatz am Luftstromeinlass 36 erhöht werden kann.

Die Wärmeübertragung kann allgemein wie folgt beschrieben werden:

$$dT/dt = 1/(m{*}Cp)\,(QR^{*} - QK^{*} - QS^{*} - QL^{*})$$

$dT/dt$ = Temperaturgefälle

$m$ = Massen der Zentralscheibe 3 und/oder der Anpressplatten 4 und 5 (Die Massen dürfen einen Mindestwert nicht unterschreiten, damit für eine ausreichende Aufnahme der Reibungswärme gesorgt ist.)

$Cp$ = Wärmekapazitätskonstante des Materials der Zentralscheibe 3 und/oder der Anpressplatten 4 und 5 (in Abhängigkeit des benutzten Materials)

$QR^{*}$ = eingebrachte Reibungswärme

$QK^{*}$ = Wärmeverlust durch Konvektion (beinhaltet die Wärmeübergangskonstante ALPHA) an der Zentralscheibe 3 und/oder an den Anpressplatten 4 und 5 und repräsentiert das Innere Kühlungssystem 51

$QS^{*}$ = Wärmeverlust über Strahlung (Vergrößerung der Angriffsflächen zur Wärmeübertragung an den Kühlluftstrom) und repräsentiert das Innere Kühlungssystem 51

$QL^{*}$ = Wärmeverlust über die Leitung der benachbarten Systeme und repräsentiert das Äußere Kühlungssystem 57 was den Thermischen Austausch zwischen dem Kupplugsgehäuse 12 und der Umgebung direkt oder über den Frontkühler 24 bewerkstelligt

Anhand dieser Betrachtung kann man feststellen, dass drei Parameter verändert werden können. Diese drei Parameter sind die Massen sowie der Wärmeverlust durch Konvektion (QK*) und der Wärmeverlust durch Abstrahlung (QS*).

Alle anderen Parameter sind entweder durch die Kupplungskonstruktion vorgegeben und somit nicht veränderbar, oder es muss ein externes Kühlungssystem geschaffen werden. Das externe Kühlungssystem allein hat allerdings den entscheidenden Nachteil, dass man die Reibungsoberflächen nicht erreicht und somit nicht gezielt kühlen kann.

Bekannte Konstruktionen von Doppeltrocken-Kupplungs-Systemen sind als Massen-Kühlsystems mit hohen Massen und mit hohem thermischen Wiederstand ausgelegt. Die Konvektion der Wärme aus den Massen in das Äußere Kühlsystem ist sehr gering und der entscheidende Nachteil des Massen-Kühlsystems.

Mit der erfindungsgemäßen Konstruktion können aber sämtliche Probleme gelöst werden.

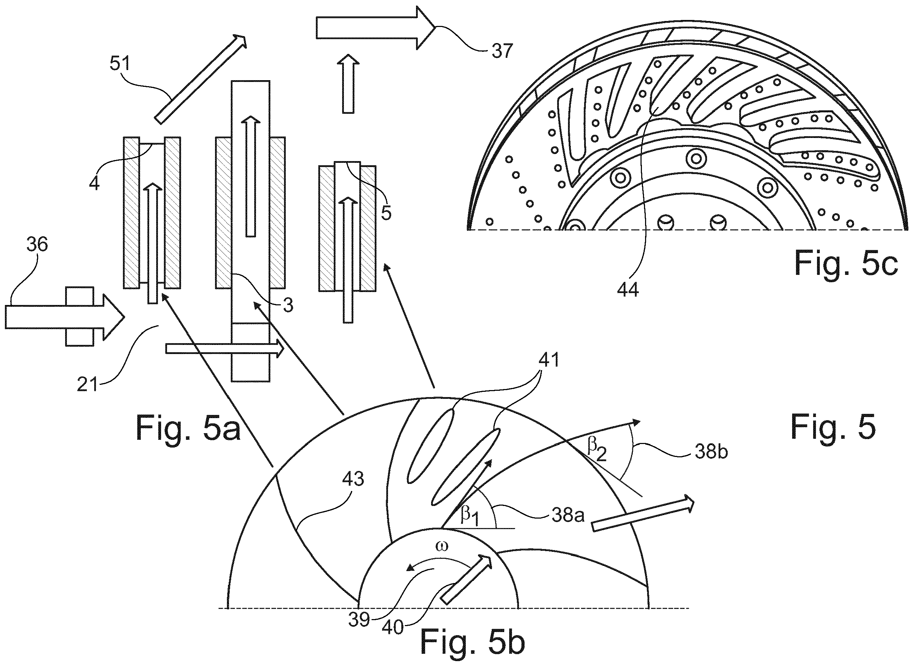

Fig. 5b zeigt die Gestaltung der Lüfterradsysteme 17a bis 17c. Diese bestehen aus den Lüfterschaufeln 43. Die Anzahl der Lüfterschaufel 43 kann wahlweise optimiert werden, und zwar speziell für die Zentralscheibe 3 und die jeweiligen Anpressplatten 4 und 5 individuell. Der Eintrittswinkel Beta 1 (Position 38a) und der Austrittswinkel Beta 2 (Position 38b) bestimmen hierbei die Richtung und Geschwindigkeit (Position 40) des Luftstroms. Die Geschwindigkeit V des Luftstroms steigt dabei proportional mit der Winkelgeschwindigkeit Omega des Lüfterrades an.

In Fig. 5b ist ein Querschnitt durch die Lüfterradsysteme 17a bis 17c dargestellt, und zwar als Detail zu dem in Fig. 5a gezeigten gesamten Lüftersystem 21. Um die Kühlfläche zu vergrößern, können zusätzliche Kühlinseln 41 eingefügt werden, um die Angriffsfläche, die Konvektion und die Wärmeabstrahlung zu erhöhen. Des Weiteren können, wie in Fig. 5c dargestellt, Kühlqueröffnungen 44 eingebracht werden, um die Wärmeabfuhr direkt an der Reibstelle zu verbessern.

In Fig. 5a ist lediglich das Lüfterradsystem für sich allein dargestellt, wobei gezeigt werden soll, dass das Lüfterradsystem auch bei Getriebesystemen mit Einzelkupplungsanwendungen anwendbar ist, z.B. bei manuell betätigten Getrieben oder auch bei automatisierten Schaltgetrieben.

Bei dieser Konstruktion wird der durch das Lüfterradsystem 17a bis 17c erzeugte Luftstrom 36, 37 an die Drehzahl der Eingangswelle 8 angepasst, d.h., dass bei höherer Motordrehzahl, bei der auch die Reibscheiben 6 und 7 unter Umständen stärker wärmebelastet werden, der Luftstrom ebenfalls intensiviert wird. Durch diese optimale, aktive Luftkühlung der Doppelkupplung werden die Temperaturen des aus der Zentralscheibe 3, den Anpressplatten 4 und 5 sowie den Reibscheiben 6 und 7 bestehenden Kupplungssystems erheblich reduziert, wodurch nicht nur der Verschleiß der einzelnen Kupplungteile verringert, sondern auch der Reibwert der Reibscheiben 6 und 7 stabilisiert wird. Durch die Stabilisierung des Reibwertes der Reibscheiben 6 und 7 ist es auch möglich, bei gleicher Anpresskraft der Anpressplatten 4 und 5 stets ein stabiles Drehmoment zu übertragen. Darüber hinaus wird auch die Geruchsbildung weitestgehend vermieden. Ferner ermöglicht diese Lösung eine sehr viel schnellere Abkühlung im geschlossenen Kupplungszustand.

Aufgrund der konstruktiven Anordnung des Lufteinlasses 13 und des Luftauslasses 14 an gegenüberliegenden Enden des Kupplungsgehäuses ist eine sehr intensive Luftzirkulation durch die gesamte Doppelkupplung 1, 28 möglich. Infolge dieser äußerst aktiven Luftkühlung und vor allem durch die Integration des jeweiligen Lüfterradsystems in die Zentralscheibe 3 bzw. in die Anpressplatten 4, 5 können auch die Volumina der Gussmassen der Zentralscheibe 3 sowie der Anpressplatten 4, 5 reduziert werden, sodass auch insoweit Einsparungen möglich sind. Gleichzeitig werden auch die Kupplungsverluste reduziert.

Um den Kühlluftstrom 36, 37 durch die Antriebsscheibe 2 und die Zentralscheibe 3 zu den Lüfterradsystemen 17a bis 17c transportieren zu können, sind die bereits erwähnten Luftdurchtrittsöffnungen 27 vorgesehen, durch die die Kühlluft aus dem mit dem Lufteinlass 13 verbundenen Bereich der Äußeren Kühlung 57 vor der Antriebsscheibe 2 angesaugt und durch die gesamte Kupplung zum Luftaustritt 14 der Äußeren Kühlung 57 geleitet werden kann. Diese Ausführungsform ist insbesondere in den Figuren 6 und 7 dargestellt. Wahlweise können auch bei diesem Ausführungsbeispiel zusätzliche Lüfterradsysteme, wie eingangs beschrieben anstelle der Luftdurchtrittsöffnungen 27 und15, wahlweise in die Antriebsscheibe 2 und oder in die Zentralscheibe 3 , integriert werden.

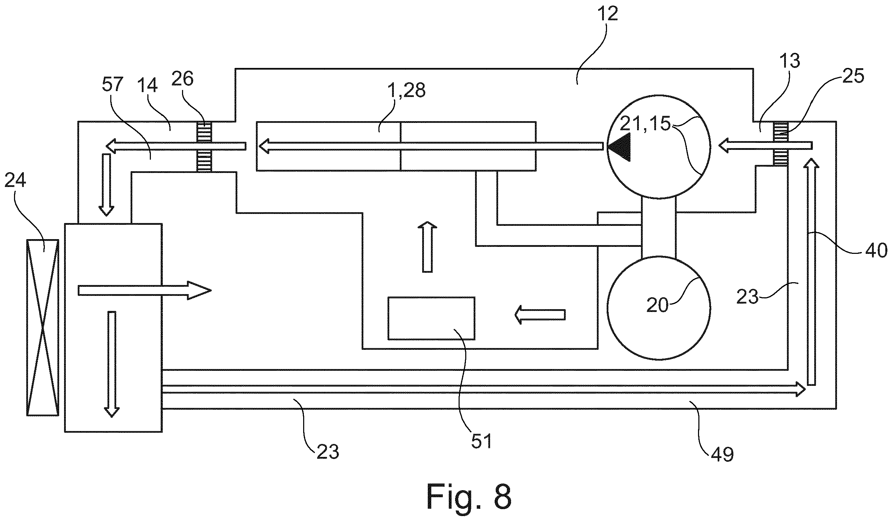

In Fig. 8 ist in schematischer Darstellung ein Ausführungsbeispiel für eine Möglichkeit zur Führung des Kühlluftstroms durch einen mechanischen Antrieb gezeigt, wobei die einzelnen Bauteile nur schematisch dargestellt sind.

Ein als Kreis dargestelltes Lüfterradsystem 15 wird von einem Motor 20 angetrieben. Dieses Lüfterradsystem 15 ist einer Doppelkupplung 1, 28 vorgeschaltet. Der Kühlluftstrom 49 wird durch ein Leitungssystem 23 geführt, welches vom Frontkühler 24 ausgeht und durch einen im Lufteinlass des Kupplungsgehäuses 12 angeordneten Einlassfilter 25 in das Kupplungsgehäuse 12 eingeleitet wird und bildet somit das Äußere Kühlungssystem 57.

Das vom Motor 20 angetriebene Lüfterradsystem 21, auch im Kreis dargestellt, bläst die Kühlluft 40 durch beide Teilkupplungen der Doppelkupplung 1, 28 hindurch. Der darin erwärmte Kühlluftstrom 40 gelangt dann in das Kupplungsgehäuse und schließlich durch den Luftauslass 14 sowie einen in dem Luftauslass 14 angeordneten Auslassfilter 26 zurück zum Frontkühler 24 und bildet somit mit dem Lüfterradsystem 15, 21 das Innere Kühlungssystem 51.

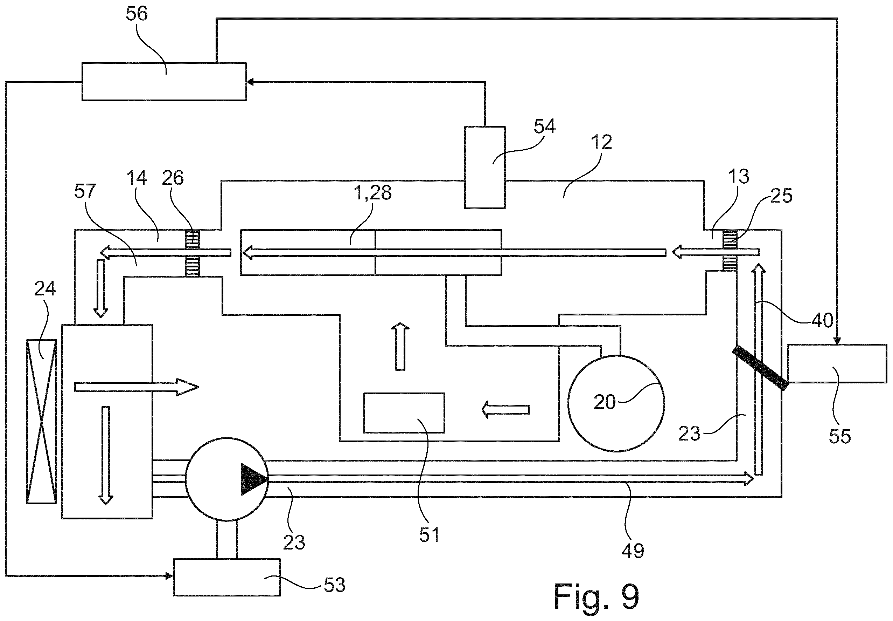

In Fig. 9 ist in schematischer Darstellung ein Ausführungsbeispiel für eine Möglichkeit zur elektronisch gesteuerten Führung der einzelnen Kühlluftströme gezeigt. Hier ist das Äußere Kühlungssystem als elektronisch gesteuertes System ausgelegt. Das Innere Kühlungssystem 51 bleibt mechanisch wie in dieser Applikation beschrieben und trans-

# EP 2 951 454 B1

portiert die erzeugte Kupplungswärme über den Luftstrom in das Kupplungsgehäuse . Es ist technisch nicht möglich hier eine elektronisch gesteuerte Kühlung zu integrieren.

Eine Ausführungsmöglichkeit der elektronischen Ansteuerung ist als Kreis/Pumpe dargestelltes elektronisch gesteuertes Pumpensystems 53 wird von einem Elektromotor angetrieben und über ein Steuergerät 56 angesteuert integriert. Dieses elektrische Pumpensystem ist in dem äußeren Kühlsystem 57/Leitungssystem 23 installiert. Der Kühlluftstrom 49, wie im mechanisch kontrollierten System in Fig. 8, wird durch ein Leitungssystem 23 geführt, welches vom Frontkühler 24 ausgeht und durch einen im Lufteinlass des Kupplungsgehäuses 12 angeordneten Einlassfilter 25 in das Kupplungsgehäuse 12 eingeleitet wird. Der Kühlluftstrom 49 wird in Abhängigkeit der Lufttemperatur, welche vom Temperatursensor 54 gemessen wird, im Kupplungsgehäuse elektronisch geregelt. Diese Regelung kann auch in Abhängigkeit eines Kupplungstemperaturmodelles, das im Steuergerät 56 integriert ist, oder in Kombination mit einem Temperatursensor 54 erfolgen.

Eine zweite Ausführungsmöglichkeit der elektronischen Ansteuerung sieht diese Ausführung eine elektronische Kontrolle des Luftstromes über ein elektrisch verstellbares Luftklappensystem 55, integriert im Leitungssystem 23 vor. Der Luftstrom kann dann in Abhängigkeit der Lufttemperatur , gemessen über den Temperatursensor 54 im Kupplungsgehäuses 54 entweder über eine Luftklappensteuerung in Kombination mit einem mechanisch angetriebenen System wie in dieser Applikation beschrieben oder mit einem elektronisch gesteuertes Pumpensystem 53 kombiniert werden.

Durch diese Art der Luftführung ist gewährleistet, dass die Kühlluft frei von Wasser ist. Weiterhin wird sichergestellt, dass aufgrund der Filter 25 und 26, die in dem Lufteinlass 13 bzw. dem Luftauslass 14 des Kupplungsgehäuses 12 angeordnet sind, die durch die Kupplungsteile strömende Kühlluft sauber bleibt.

Durch die Erfindung wird somit ein optimales, aktives Kühlsystem für eine trockene Doppelkupplung geschaffen, sodass deren Leistungsfähigkeit erhöht, der Verschleiß verringert und auch die Gussmassen verschiedener Kupplungsscheiben reduziert werden können. Damit wird auch die Geruchsbildung erheblich reduziert.

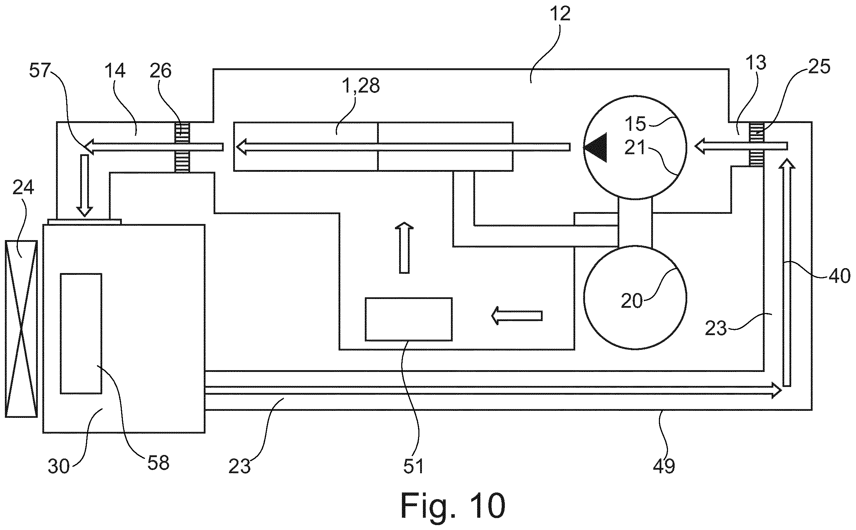

Fig. 10 zeigt den gleichen Kühlluftstromkreislauf wie in Fig. 8 und Fig. 9, allerdings ohne Hauptkühler, jedoch mit dem Fahrzeuglüftersystem 58, was hier im Kühlkreislauf integriert ist. In dieser ersten Version wird am vorderen Fahrzeugende 30 die Kupplungswärme mittels des Fahrzeuglüftersystems 58 mit der Umgebung ausgetauscht.

Als zweite Version kann das Fahrzeuglüftersystem auch als Pumpe installiert werden, um den Luftstrom 49 des äußeren Kühlsystems 57 zu bewerkstelligen, wodurch der Kühlung des Kupplungsgehäuses über die Umgebung erfolgt.

Das Fahrzeuglüftersystem kann in beiden Versionen wahlweise über eine gemessene Kupplungsgehäusetemperatur oder eine berechnete Kupplungstemperatur über ein Kupplungstemperaturmodell gesteuert bzw. geregelt werden.

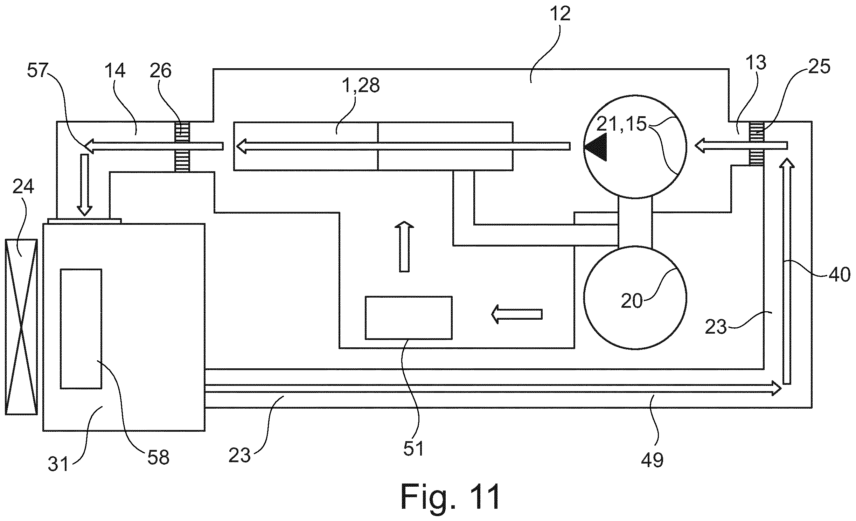

Fig. 11 zeigt den gleichen Kühlkreislauf wie in Fig. 10 ohne Kühler, wobei der Wärmeaustausch im Motorbereich 31 vorgenommen wird. Hier kann ebenfalls das Fahrzeuglüftersystem wahlweise über eine gemessene Kupplungsgehäusetemperatur oder eine berechnete Kupplungstemperatur über ein Kupplungstemperaturmodell gesteuert bzw. geregelt werden, um die Umgebungstemperatur der Kupplung bzw. die daraus resultierende Kupplungsgehäuse- / Kupplungseingangstemperatur zu reduzieren.

BEZUGSZEICHENLISTE

| | |
|---|---|
| 1 | Doppelkupplung / System 1 |
| 2 | Antriebsscheibe |
| 3 | Zentralscheibe |
| 4 | Anpressplatte |
| 5 | Anpressplatte |
| 6 | Reibscheibe |
| 7 | Reibscheibe |
| 8 | Eingangswelle |
| 9 | Torsionsdämpfer |
| 10 | Ausgangswelle (Vollwelle) |
| 11 | Ausgangswelle (Hohlwelle) |
| 12 | Kupplungsgehäuse |
| 13 | Lufteinlass |
| 14 | Luftauslass |
| 15 | integriertes Lüfterradsystem |
| 16 | Sekundärscheibe |
| 17a | Lüfterradsystem Anpressplatte 1 |

**EP 2 951 454 B1**

17b    Lüfterradsystem Zentralscheibe
17c    Lüfterradsystem Anpressplatte 2
18    Kardanische Anlaufscheibe
19    Hohlwellenlager
20    Motor
21    Lüfterradsystem
22a    Kerbverzahnung Vollwelle
22b    Kerbverzahnung Hohlwelle
23    Leitungssystem
24    Frontkühler
25    Einlassfilter
26    Auslassfilter
27    Luftdurchtrittsöffnungen - wahlweise ausgeführt als Lüfterrad 15
28    Doppelkupplung / System 2
29    Zwischenkörper Doppelkupplung
30    Fahrzeug vorderer Bereich - kein Kühler
31    Motorbereich - kein Kühler
32    Dämpfersysteme
33    axiales / radiales Federsystem
34    Zentralscheibe gelagert auf der Hohlwelle
35a    Dämpfersystem 1
35b    Dämpfersystem 2
36    Luftstromeinlass
37    Luftstromauslass
38a    Eintrittswinkel Beta 1
38b    Austrittswinkel Beta 2
39    Omega - Drehrichtung
40    Kühlstromrichtung und V Geschwindigkeit
41    Kühlinseln
43    Lüfterschaufel
44    Kühlqueröffnungen
45    Anpressfläche Zentralscheibe
46    Anpressfläche Anpressplatte 1
47    Anpressfläche Anpressplatte 2
48    Pilotlager
49    Luftstrom
50    Kupplungskörper
51    Inneres Kühlsystem
53    Elektrisch angetriebenes Pumpensystem
54    Lufttemperatur Sensor - Kupplungsgehäuse
55    Elektrisch verstellbares Luftklappensystem
56    Steuergerät
57    Äußeres Kühlsystem
58    Fahrzeuglüfterrad

**Patentansprüche**

**1.** Doppelkupplungsgetriebe für Kraftfahrzeuge mit zwei Teilgetrieben, einer trockenen Doppelkupplung (1; 28), die das Drehmoment vom Motor wahlweise auf eines der beiden Teilgetriebe überträgt, sowie einem Kühlsystem mit einem Lüfterradsystem (21) zur aktiven Luftkühlung der Doppelkupplung (1; 28), wobei,

- dass das Lüfterrad des Lüfterradsystems (21) in die Zentralscheibe (3) integriert ist und beide ein zusammenhängendes Bauteil bilden,
- dass die Zentralscheibe (3) als Lüfterrad des Lüfterradsystems (21) ausgebildet ist,
- dass die Zentralscheibe (3) Durchlässe für den Kühlluftstrom aufweist,
- dass die Durchlässe radial verlaufen bzw. eine Radialkomponente aufweisen, **dadurch gekennzeichnet, dass**
- die in der Zentralscheibe (3) vorgesehenen Lüfterräder mit Lüfterschaufeln (43) versehen sind, die einstellbare Eintrittswinkel (37) und Austrittswinkel (38) zum Anpassen der Luftstromgeschwindigkeit und -richtung (40) aufweisen und

- dass zur Vergrößerung der Kühloberfläche zwischen den Lüfterschaufeln Kühlinseln (41) und/oder Kühlqueröffnungen (44) vorgesehen sind.

2. Doppelkupplungsgetriebe nach Anspruch 1,
**dadurch gekennzeichnet,**
**dass** die Durchlässe in der Zentralscheibe (3) parallel zur Reiboberfläche ausgebildet bzw. angeordnet sind.

3. Doppelkupplungsgetriebe nach Anspruch 1 oder 2,
**dadurch gekennzeichnet,**
**dass** die in der Zentralscheibe (3) ausgebildeten Lüfterräder einstückig oder mehrstückig, insbesondere verschraubt oder vernietet, mit der Zentralscheibe ausgebildet sind.

4. Doppelkupplungsgetriebe nach einem der vorhergehenden Ansprüche,
**dadurch gekennzeichnet,**
**dass** das Lüfterradsystem (21) mit derselben Drehzahl wie die vom Motor kommende Eingangswelle (8) der Doppelkupplung (1; 28) rotiert.

5. Doppelkupplungsgetriebe nach einem der vorhergehenden Ansprüche,
**dadurch gekennzeichnet,**
**dass** das Lüfterradsystem (21) mit der auf der Eingangswelle (8) sitzenden Antriebsscheibe (2) der Doppelkupplung (1; 28) rotiert.

6. Doppelkupplungsgetriebe nach einem der vorherigen Ansprüche,
**dadurch gekennzeichnet,**
**dass** ein Inneres Kühlsystem (51) die Wärme von den Reiboberflächen der Doppelkupplung (1, 28) in ein Kupplungsgehäuse (12) abführt und ein äußeres Kühlsystem (57) die Wärme aus dem Kupplungsgehäuse (12) in die Umgebung abführt.

7. Doppelkupplungsgetriebe nach Anspruch 6,
**dadurch gekennzeichnet,**
**dass** das äußere Kühlsystem über ein zusätzliches Lüfterrad (15) verfügt, welches mit der Antriebsscheibe (2) der Doppelkupplung (28) und/oder der Zentralscheibe (3) mechanisch verbunden ist.

8. Doppelkupplungsgetriebe nach Anspruch 6 oder 7,
**dadurch gekennzeichnet,**
**dass** der Einlassbereich (13) für die Kühlluft des äußeren Kühlsystems (57) im Kupplungsgehäuse (12) in Strömungsrichtung vor dem Lüfterrad (15) bzw. Lüftersystem (21) liegt.

9. Doppelkupplungsgetriebe nach einem der Ansprüche 6 bis 8,
**dadurch gekennzeichnet,**
**dass** der Auslassbereich (14) für die Kühlluft (49, 40) des äußeren Kühlsystems (57) an den dem Einlassbereich (13) gegenüberliegenden Ende des Kupplungsgehäuses (12) liegt.

10. Doppelkupplungsgetriebe nach einem der Ansprüche 6 bis 9,
**dadurch gekennzeichnet,**
**dass** die Einlass- und Auslassbereiche der Kühlluft (49, 40) über ein Leitungssystem (23) mit dem Frontkühler (24) des Fahrzeugs verbunden sind.

11. Doppelkupplungsgetriebe nach einem der Ansprüche 6 bis 10,
**dadurch gekennzeichnet,**
**dass** der Kühlluftstrom (49) des äußeren Kühlsystems in Abhängigkeit von der Temperatur des Kupplungsgehäuses (12) und/oder über ein Kupplungstemperaturmodel geregelt ist.

12. Doppelkupplungsgetriebe nach Anspruch 11,
**dadurch gekennzeichnet,**
**dass** die Regelung des Kühlluftstromes (49) über ein verstellbares Luftklappensystem (55), mit einem elektrisch angetriebenen Pumpensystems (53) oder einem mechanisch angetriebenen System, insbesondere nach den Ansprüchen 1 bis 10, erfolgt.

13. Doppelkupplungsgetriebe nach einem der Ansprüche 6 bis 12,
**dadurch gekennzeichnet,**
**dass** der Kühlluftstrom (49) des äußeren Kühlsystems (57) mit dem Luftstrom des Fahrzeuglüfters (58) gemischt und gekühlt wird.

14. Doppelkupplungsgetriebe nach einem der Ansprüche 6 bis 13,
**dadurch gekennzeichnet,**
**dass** der Kühlluftstrom (49) des äußeren Kühlsystems (57) erzeugt wird, indem der Fahrzeuglüfter (58) als Pumpe wirkt.

**Claims**

1. Dual clutch transmission for motor vehicles, having two transmission sections, a dry dual clutch (1; 28), which transmits the torque from the engine selectively to one of the two transmission sections, and a cooling system having a fan impeller system (21) for active air cooling of the dual clutch (1; 28),
   wherein

   - that the fan impeller of the fan impeller system (21) is integrated into the central disk (3) and the two form a coherent component,
   - that the central disk (3) is designed as a fan impeller of the fan impeller system (21),
   - that the central disk (3) has passages for the cooling air flow,
   - that the passages extend radially or have a radial component,
   **characterized in that**
   - the fan impellers provided in the central disk (3) are provided with fan blades (43) which have adjustable entry angles (37) and exit angles (38) for adaptation of the air flow speed and direction (40), and
   - **in that** cooling islands (41) and/or transverse cooling openings (44) are provided between the fan blades in order to increase the cooling surface area.

2. Dual clutch transmission according to Claim 1, **characterized in that** the passages in the central disk (3) are formed or arranged parallel to the friction surface.

3. Dual clutch transmission according to Claim 1 or 2, **characterized in that** the fan impellers formed in the central disk (3) are formed integrally or non-integrally with the central disk, in particular being screwed or riveted thereto.

4. Dual clutch transmission according to one of the preceding claims, **characterized in that** the fan impeller system (21) rotates at the same speed as the input shaft (8) of the dual clutch (1; 28), which comes from the engine.

5. Dual clutch transmission according to one of the preceding claims, **characterized in that** the fan impeller system (21) rotates with the driving disk (2) of the dual clutch (1; 28), which is seated on the input shaft (8).

6. Dual clutch transmission according to one of the preceding claims, **characterized in that** an inner cooling system (51) carries the heat from the friction surfaces of the dual clutch (1, 28) into a clutch housing (12), and an outer cooling system (57) carries the heat from the clutch housing (12) into the environment.

7. Dual clutch transmission according to Claim 6, **characterized in that** the outer cooling system has an additional fan impeller (15), which is connected mechanically to the driving disk (2) of the dual clutch (28) and/or to the central disk (3).

8. Dual clutch transmission according to Claim 6 or 7, **characterized in that** the inlet region (13) for the cooling air of the outer cooling system (57) is situated ahead of the fan impeller (15) or fan system (21) in the flow direction in the clutch housing (12) .

9. Dual clutch transmission according to one of Claims 6 to 8, **characterized in that** the outlet region (14) for the cooling air (49, 40) of the outer cooling system (57) is situated at the opposite end of the clutch housing (12) from the inlet region (13).

10. Dual clutch transmission according to one of Claims 6 to 9, **characterized in that** the inlet and outlet regions for the cooling air (49, 40) are connected by a conduit system (23) to the front radiator (24) of the vehicle.

11. Dual clutch transmission according to one of Claims 6 to 10, **characterized in that** the cooling air flow (49) of the outer cooling system is controlled in accordance with the temperature of the clutch housing (12) and/or by means of a clutch temperature model.

12. Dual clutch transmission according to Claim 11, **characterized in that** control of the cooling air flow (49) is performed by means of an adjustable air flap system (55), with an electrically driven pump system (53) or a mechanically driven system, in particular according to Claims 1 to 10.

13. Dual clutch transmission according to one of Claims 6 to 12, **characterized in that** the cooling air flow (49) of the outer cooling system (57) is mixed and cooled with the air flow of the vehicle fan (58).

14. Dual clutch transmission according to one of Claims 6 to 13, **characterized in that** the cooling air flow (49) of the outer cooling system (57) is produced by the vehicle fan (58) acting as a pump.

**Revendications**

1. Transmission à double embrayage pour véhicules automobiles, comprenant deux transmissions partielles, un double embrayage à sec (1 ; 28) qui transmet le couple depuis le moteur de manière sélective à l'une des deux transmissions partielles, ainsi qu'un système de refroidissement comprenant un système de roue de ventilateur (21) pour le refroidissement d'air actif du double embrayage (1 ; 28),

- que la roue de ventilateur du système de roue de ventilateur (21) étant intégrée dans le disque central (3) et les deux formant un composant cohérent,
- que le disque central (3) étant réalisé sous forme de roue de ventilateur du système de roue de ventilateur (21),
- que le disque central (3) présentant des passages pour le flux d'air de refroidissement,
- que les passages s'étendant radialement ou présentant une composante radiale,
**caractérisée en ce que**
- les roues de ventilateur prévues dans le disque central (3) sont pourvues de pales de ventilateur (43) qui présentent des angles d'entrée ajustables (37) et des angles de sortie ajustables (38) pour l'adaptation de la vitesse et de la direction du flux d'air (40), et
- que pour augmenter la surface de refroidissement entre les pales de ventilateur, des îlots de refroidissement (41) et/ou des ouvertures transversales de refroidissement (44) sont prévus.

2. Transmission à double embrayage selon la revendication 1,
**caractérisée en ce que**
les passages dans le disque central (3) sont réalisés ou disposés parallèlement à la surface de friction.

3. Transmission à double embrayage selon la revendication 1 ou 2,
**caractérisée en ce que**
les roues de ventilateur réalisées dans le disque central (3) sont réalisées d'une seule pièce ou en plusieurs parties, notamment sont vissées ou rivetées au disque central.

4. Transmission à double embrayage selon l'une quelconque des revendications précédentes,
**caractérisée en ce que**
le système de roue de ventilateur (21) tourne avec la même vitesse de rotation que l'arbre d'entrée (8) du double embrayage (1 ; 28) provenant du moteur.

5. Transmission à double embrayage selon l'une quelconque des revendications précédentes,
**caractérisée en ce que**
le système de roue de ventilateur (21) tourne avec le disque d'entraînement (2) du double embrayage (1 ; 28) reposant sur l'arbre d'entrée (8).

**6.** Transmission à double embrayage selon l'une quelconque des revendications précédentes, **caractérisée en ce qu'**un système de refroidissement intérieur (51) évacue la chaleur des surfaces de friction du double embrayage (1, 28) dans un boîtier d'embrayage (12) et un système de refroidissement extérieur (57) évacue la chaleur hors du boîtier d'embrayage (12) dans l'environnement.

**7.** Transmission à double embrayage selon la revendication 6, **caractérisée en ce que** le système de refroidissement extérieur dispose d'une roue de ventilateur supplémentaire (15) qui est connectée mécaniquement au disque d'entraînement (2) du double embrayage (28) et/ou au disque central (3).

**8.** Transmission à double embrayage selon la revendication 6 ou 7, **caractérisée en ce que** la région d'entrée (13) pour l'air de refroidissement du système de refroidissement extérieur (57) est située dans le boîtier d'embrayage (12) dans la direction d'écoulement avant la roue de ventilateur (15) ou avant le système de ventilateur (21).

**9.** Transmission à double embrayage selon l'une quelconque des revendications 6 à 8, **caractérisée en ce que** la région de sortie (14) pour l'air de refroidissement (49, 40) du système de refroidissement extérieur (57) est située au niveau de l'extrémité du boîtier d'embrayage (12) opposée à la région d'entrée (13).

**10.** Transmission à double embrayage selon l'une quelconque des revendications 6 à 9, **caractérisée en ce que** les régions d'entrée et de sortie de l'air de refroidissement (49, 40) sont connectées par le biais d'un système de conduites (23) au radiateur avant (24) du véhicule.

**11.** Transmission à double embrayage selon l'une quelconque des revendications 6 à 10, **caractérisée en ce que** le flux d'air de refroidissement (49) du système de refroidissement extérieur est régulé en fonction de la température du boîtier d'embrayage (12) et/ou par le biais d'un modèle de température d'embrayage.

**12.** Transmission à double embrayage selon la revendication 11, **caractérisée en ce que** la régulation du flux d'air de refroidissement (49) est effectuée par le biais d'un système de volet d'air réglable (55), avec un système de pompe (53) entraîné électriquement ou avec un système entraîné mécaniquement, en particulier selon les revendications 1 à 10.

**13.** Transmission à double embrayage selon l'une quelconque des revendications 6 à 12, **caractérisée en ce que** le flux d'air de refroidissement (49) du système de refroidissement extérieur (57) est mélangé au flux d'air du ventilateur du véhicule (58) et refroidi.

**14.** Transmission à double embrayage selon l'une quelconque des revendications 6 à 13, **caractérisée en ce que** le flux d'air de refroidissement (49) du système de refroidissement extérieur (57) est produit par le fait que le ventilateur de véhicule (58) fonctionne en tant que pompe.

Fig. 1

Fig. 2

Fig. 3

Fig. 4

Fig. 5a

Fig. 5b

Fig. 5c

Fig. 5

Fig. 6

Fig. 7

Fig. 8

EP 2 951 454 B1

Fig. 9

Fig. 10

Fig. 11

EP 2 951 454 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011087458
- DE 10225807
- DE 19858260 C2
- US 5857547 A
- DE 102010007198 A1
- US 20120123635 A1
- DE 102008033813 A1